# EUROPÄISCHE PATENTSCHRIFT

(11) **EP 2 845 145 B1**
(45) Veröffentlichungstag und Bekanntmachung des Hinweises auf die Patenterteilung: **17.04.2019**
(21) Anmeldenummer: 13727028.6
(22) Anmeldetag: 02.05.2013
(51) Int. Cl.: G06K 9/00

(54) **VORRICHTUNG UND VERFAHREN ZUM VERGLEICH ZWEIER GRAFIK- UND TEXTELEMENTE ENTHALTENDEN DATEIEN**
APPARATUS AND METHOD FOR COMPARING TWO DOCUMENTS CONTAINING GRAPHICAL AND TEXT ELEMENTS
APPAREIL ET MÉTHODE POUR COMPARER DEUX DOCUMENTS CONTENANTS DES ÉLÉMENTS GRAPHICS ET TEXTUELS

(30) Priorität: 02.05.2012 DE 102012008512
(43) Veröffentlichungstag der Anmeldung: 11.03.2015
(73) Patentinhaber: Eyec GmbH, 20095 Hamburg (DE)
(72) Erfinder: KAUPP, Ansgar, 21521 Wohltorf (DE); LÜTJENS, Dirk, 22459 Hamburg (DE); SPRINGMANN, Sören, 20359 Hamburg (DE)
(74) Vertreter: Reuther, Martin
(86) Internationale Anmeldenummer: PCT/DE2013/000233
(87) Internationale Veröffentlichungsnummer: WO 2013/163978

(56) Entgegenhaltungen:
- DE-C2- 3 414 455
- IL-A- 103 016
- US-A1- 2007 019 864
- US-A1- 2008 050 016
- US-B1- 6 397 213

## Beschreibung

Die Erfindung betrifft eine Vorrichtung zum Vergleich zweier Grafik- und Textelemente enthaltenden Dateien. Die Patentschrift DE 34 144 55 C2 offenbart ein Verfahren zum Lesen und Verarbeiten von Information, die aus dekodierbarer Schriftinformation und/oder nicht dekodierbarer Grafikinformation besteht.

Entsprechende Vorrichtungen sind als Textverifikationstools (TVT; *text verification tools*) oder Objektverifikationstools (OVT; *object verification tools*) aus dem Stand der Technik bekannt. Hierbei erfolgt bei OVTs ein Objektvergleich durch einen pixelweisen Vergleich der beiden Dateien, die ggf. hierfür zuvor gerendert werden. Bei reinen Grafikbestandteilen derartiger Dateien ergeben sich hierdurch sehr gute Ergebnisse, da jeweils abweichende Pixel unmittelbar als Fehler erkannt und dargestellt werden können. Für einen Textvergleich erweisen sich derartige OVTs als ungeeignet, da bei der Änderung eines Textes Zeilenumbrüche bzw. geänderte Buchstaben- oder Wortabstände generiert werden, die - obgleich keine Änderung stattgefunden hat - unmittelbar in Abweichungen der jeweiligen Pixel resultieren und als Fehler angezeigt werden. Letzteres passiert bei der Textverifikation nicht, wobei hier jeweils aus den Dateien zunächst ein Text extrahiert wird, wozu beispielsweise an sich bekannte OCR-Programme genutzt werden können. Ebenso kann zur Texterkennung Text zunächst durch eine Extraktion aus komplexeren Dateien, wie beispielsweise pdf-, PostScript-, word-Dateien, mit entsprechend als Text definierten Dateibestandteilen separiert werden. Darüber hinaus wird bei TVTs - je nach Dateityp - noch der Textfluss bzw. Textlauf angeglichen, was insbesondere bei Text in mehreren Spalten oder aber vor den Text gesetzten Absatz- oder Zeilennummern bzw. oben oder unten angeordneten Kopf- oder Fußangaben, wie Seitenzahlen, notwendig ist, um einen inhaltlichen bzw. textlichen Vergleich zu ermöglichen. Hiernach kann jedoch durch derartige Textvergleichstools eine Textänderung schnell und präzise erkannt und angezeigt werden. Allerdings haben derartige Textvergleichstools den Nachteil, dass Grafiken nicht verglichen werden können, sodass letztlich hier allenfalls ein Gesamtvergleich, nämlich dass ein identisches Bild vorliegt oder nicht, möglich ist.

Es kommt mithin bei beiden Verfahren zu einer Okklusion von untergeordneten Fehlern, sodass der genaue Fehler nicht mehr erkennbar ist. Dementsprechend ist es Aufgabe vorliegender Erfindung, bei gattungsgemäßen Verfahren und Vorrichtungen diesen Nachteil zu vermeiden.

Als Lösung werden Vorrichtungen bzw. Verfahren mit den Merkmalen der unabhängigen Ansprüche vorgeschlagen.

So zeichnet sich eine Vorrichtung zum Vergleich zweier Grafik- und Textelemente enthaltenden Dateien durch einen Speicher für die beiden Dateien, Mittel zur Aufteilung der beiden Dateien in Grafik- und Textelemente, Mittel zur Texterkennung von Text in den Textelementen und Mittel zur Wandlung der erkannten Texte durch eine Anpassung der Lese- bzw. Laufrichtungen der erkannten Texte an die jeweilige Sprache, Rastergrafikmittel zur Erzeugung eines gerasterten Bildes aus den Grafikelementen, Mittel zum textlichen Vergleich der gewandelten Texte und Mittel zum graphischen Vergleich der gerasterten Bilder sowie Mittel zur, vorzugsweise gemeinsamen, Ausgabe der beiden Vergleichsergebnisse aus.

Auch zeichnet sich ein Verfahren zum Vergleich zweier Grafik- und Textelemente enthaltenden Dateien dadurch aus, dass bei beiden Dateien Grafikelemente und Textelemente aufgeteilt werden, und dass aus den Grafikelementen, wenn die entsprechende Datei nicht bereits ein Rasterformat aufweist, jeweils ein Rasterbild erzeugt wird und dass die Rastergrafiken miteinander grafisch verglichen werden sowie dass aus den Textelementen, wenn die Datei nicht bereits Text in Reinform vorliegen hat, jeweils der Text erkannt wird, dass die erkannten Texte durch eine Anpassung der Lese- bzw. Laufrichtungen der erkannten Texte an die jeweilige Sprache gewandelt und dass die gewandelten Texte miteinander textlich verglichen werden.

Durch die zuvorige Aufteilung in Grafikelemente und Textelemente wird mithin erstmals möglich, jedes der Elemente getrennt einer hierfür geeigneten Überprüfung bzw. einem hierfür geeigneten Vergleich zu unterziehen, was den Vorteil hat, dass ein entsprechender Vergleich auch zu einem entsprechend sinnvollen und sinnvoll zu interpretierenden Ergebnissen führt.

Hierbei versteht es sich, dass ein Erzeugen eines Rasterbildes nur dann notwendig ist, wenn die entsprechende Datei nicht bereits ein Rasterformat aufweist. Ebenso kann eine entsprechende Texterkennung entfallen, wenn die Datei bereits Text in Reinform vorliegen hat. Hierbei handelt es sich jedoch insbesondere im professionellen Alltagsgeschäft, beispielsweise beim Erstellen von Druckfahnen und deren Diskussion, eher um Ausnahmen, da die dort verwendeten Dateien häufig grafische Containerformate, wie beispielsweise pdf-Dateien oder PostScript-Dateien, sind.

Grundsätzlich ist es von Vorteil, wenn zum Aufteilen der Grafik- und Textelemente zunächst die Textelemente separiert und vorzugsweise in eine separate Ebene gelegt werden. Dieses kann beispielsweise dadurch geschehen, dass über im Rasterformat vorliegende Dateien Texterkennungsprogramme, wie beispielsweise OCR, angewendet werden. Der hierbei erkannte Text wird dann entsprechend in eine separate Ebene gelegt und vorzugsweise aus der Grafikebene entfernt. Ggf. kann auch auf andere Weise eine lediglich Grafik enthaltende Ebene bereitgestellt werden, indem beispielsweise sämtliche Elemente, die nicht Textelemente sind, in eine entsprechende Grafikebene überführt werden. Liegt der Text in einem grafischen Containerformat vor, so können beispielsweise als Textelement gekennzeichnete Bereiche des grafischen Containerformats dementsprechend geflagt werden und anschließend in die separate Textebene gelegt werden.

Anschließend erfolgt eine unmittelbare Texterkennung, wobei hierzu ggf. in dem grafischen Containerformat vorhandene Glyphen über an sich bekannte Tabellen Buchstaben zugeordnet werden, um den Text als solchen zu erkennen, um anschließend durch einen Textlauf den Text zu einem nhro-Text (*natural human reading order*) zu wandeln. Hierdurch werden Texte in Spalten- oder Tabellenschreibweise und Ähnliches zu inhaltlich sinnvollen Einheiten zusammengefügt, was letztlich bereits aus dem Stand der Technik bei TVTs hinlänglich bekannt ist. Insbesondere versteht es sich, dass die Lese- bzw. Laufrichtungen dieser Texte der jeweiligen Sprache, beispielsweise auch von links nach rechts und dann erst von oben nach unten oder von oben nach unten und dann erst von rechts nach links, angepasst werden können. Etwaige Änderungen des Textes können dann für den Menschen unmittelbar nachvollziehbar und übersichtlich erfasst und dargestellt werden.

Dementsprechend ist es auch von Vorteil, wenn die entsprechenden Texterkennungsmittel Mittel zur Extraktion des Textes aus den Textelementen sowie Mittel zur Darstellung eines Textlaufs umfassen.

Hierbei kann die Texterkennung zu einem Text in der Textebene oder aber auch zu einem Text in einer separaten nhro-Textebene führen.

Es versteht sich, dass bei entsprechenden Containerformaten, welche bereits separate Texte enthalten, auf eine komplexe Texterkennung verzichtet werden kann, in dem diese Texte gezielt aus dem jeweiligen Containerformat extrahiert werden. In der Praxis wird jedoch wenigstens eine der zu vergleichenden Dateien nicht in einem derartigen Format vorliegen bzw. möglicherweise sogar in einem derartigen Format vorliegen aber keine separate Texte enthalten, so dass zunächst die vorstehend erläuterte komplexe Texterkennung durchzuführen ist.

Wenn die Grafikelemente nicht bereits in Rasterform vorliegend, ist es von Vorteil, wenn diese zu einem Rasterbild gerendert, also in ein Rasterbild transformiert werden. Hierbei versteht es sich, dass das entsprechende Rasterbild ggf. in der Hauptebene der jeweiligen Datei oder aber in der Grafikebene oder einer zusätzlichen Rasterbildebene dargestellt werden kann.

Für das Rendern können die Rastergrafikmittel insbesondere einen Rastergrafikengine und/oder sogar einen Rastergrafikprozessor umfassen. Hierdurch lässt sich eine entsprechende Rasterung bzw. ein entsprechendes Rendern schnell und betriebssicher mit der gewünschten Präzision durchführen.

Vorzugsweise werden die Vergleichsergebnisse gemeinsam dargestellt, was beispielsweise durch Überlagern entsprechender Ebenen geschehen kann. Insbesondere können die Vergleichsergebnisse auf einem Monitor als Ausgabemittel ausgegeben werden.

Ebenso ist es denkbar, die Vergleichsergebnisse, vorzugsweise gemeinsam, in einer Datei abzuspeichern, die dann beispielsweise einem Kunden zur Verifikation der durchgeführten Änderungen, beispielsweise an einer Druckfahne, zur Verfügung gestellt werden können. Dementsprechend ist es von Vorteil, wenn die Ausgabemittel einen Speicher und Abspeichermittel zum Abspeichern der Vergleichsergebnisse in einer Ergebnisdatei in dem Speicher um fassen.

Die Vergleichsergebnisse sind besonders vorteilhaft weiterzuverarbeiten, wenn die Abspeichermittel die Ergebnisdatei in dem Format wenigstens einer der beiden zu vergleichenden Dateien abspeichern. Hierdurch kann sichergestellt werden, dass die zugehörigen Programme, welche zum Öffnen und ggf. Auswerten dieser Ergebnisdatei notwendig sind, bei den Personen, welche wenigstens eine der Dateien, die zu vergleichen sind, bereitgestellt haben, auch zur Verfügung stehen.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:

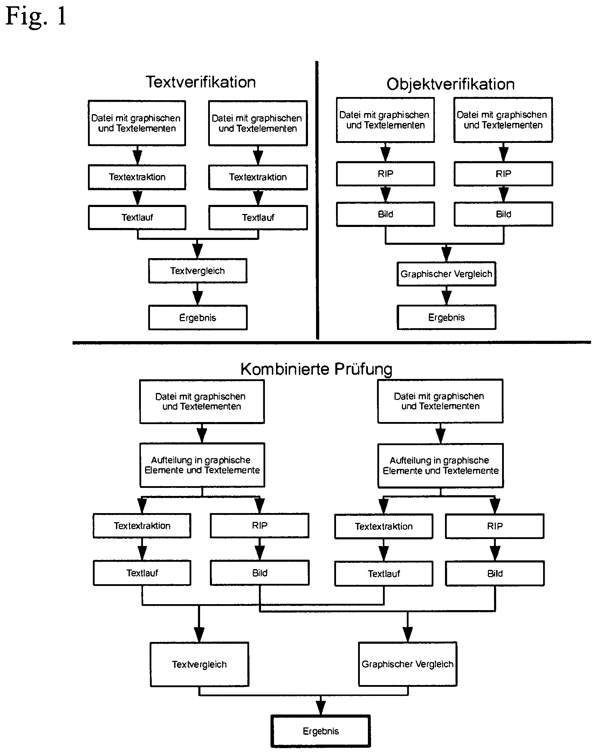

- Figur 1: im unteren Bereich die erfindungsgemäße Verfahrensführung und im oberen Bereich Verfahrensführungen nach dem Stand der Technik;
- Figur 2: zwei zu vergleichende, Grafik- und Textelemente enthaltende Dateien und das Ergebnis des Vergleichs nach herkömmlicher Objektverifikation,

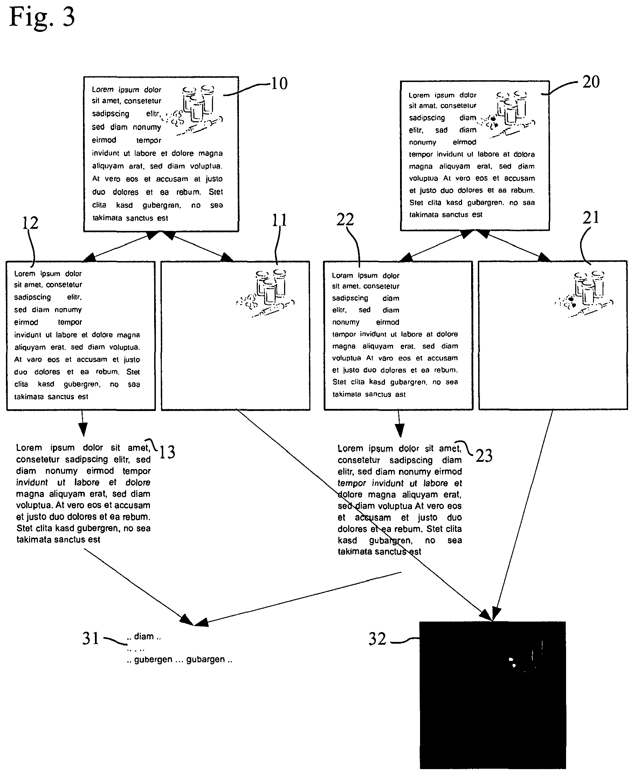

- Figur 3: die erfindungsgemäße Verfahrensführung und deren Ergebnis anhand der in Figur 2 zu vergleichenden Dateien;
- Figur 4: ein Druckbild einer beispielhaften Grafik- und Textelemente enthaltende pdf-Datei;
- Figur 5: die in Figur 4 im Druckbild dargestellte Datei in eine Strukturdarstellung;
- Figur 6: die in Figuren 4 und 5 dargestellte Datei in Textformat;
- Figur 7: eine Beispiel für den Vergleich einer chinesische Textelemente enthaltenden Datei;
- Figur 8: eine Beispiel für den Vergleich einer arabische Textelemente enthaltenden Datei; und
- Figur 9: eine Beispiel für den Vergleich einer Grafikelemente enthaltenden Datei;.

Durch die Aufteilung der zu vergleichenden Dateien 10, 20 mit grafischen Elementen und Textelementen, die jeweils in Grafikebenen 11, 21 und Textebenen 12, 22 getrennt werden, kann zunächst ein separater Textvergleich und ein separater Grafikvergleich durchgeführt werden, was dann zu entsprechend vernünftigen und nachvollziehbaren Ergebnissen führt. Ggf. können in einem ersten Schritt die beiden zu vergleichenden Dateien 10, 20 oder auch nur eine dieser Dateien 10, 20 einer Texterkennung, wie beispielsweise eine OCR, oder einem sonstigen Vorgang, welcher nach Objekte sucht oder Objekte kreiert, die Text enthalten, unterzogen werden, um auf diese Weise zunächst aus einer rein graphischen Datei 10, 20 eine Datei 10, 20 bereitzustellen, in welcher in einem Containerformat auch Textelemente zu finden sind.

Die Grafikebenen 11, 21 werden nach dem Trennen gerendert und verglichen, wobei das Ergebnis des Grafikvergleichs in einer separaten Ebene 32 dargestellt ist.

In den Textebenen 12, 22 wird zunächst eine Texterkennung und ein Textlauf durchgeführt, sodass jeweils Text 13, 23 für einen textlichen Vergleich zur Verfügung steht, dessen Ergebnis dann in einer Ebene 31 dargestellt ist.

Auf diese Weise kann schnell und betriebssicher ein Dokumentenvergleich bzw. Dateienvergleich durchgeführt werden, insbesondere wenn es sich hierbei um Druckfahnen handelt, in denen Kundenspezifische Änderungswünsche unter Dokumentation der Änderungen vorgenommen werden sollen.

Durch ein Überlappen der Ebenen 31 und 32 kann ohne Weiteres auch ein Gesamtbild, ggf. unter Invertierung des Bildes 32, zusammengestellt werden, welches die entsprechenden Fehler einheitlich dokumentiert.

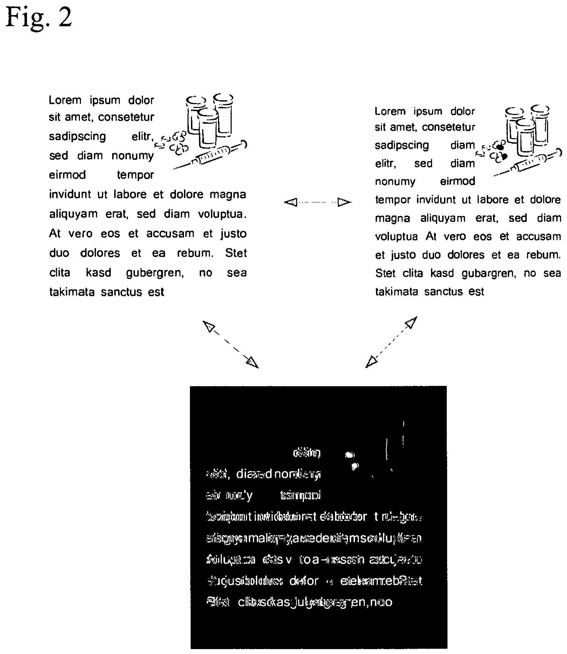

Letzteres ist, wie in Figur 2 dargestellt, bei einer Objektverifikation nicht möglich, da es hier zu einer Okklusion von Fehlern kommt. Ebenso ist unmittelbar nachvollziehbar, dass eine Textverifikation einen Grafikvergleich nicht ermöglichen kann.

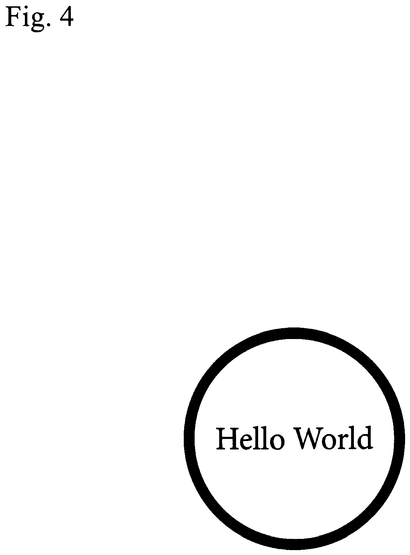

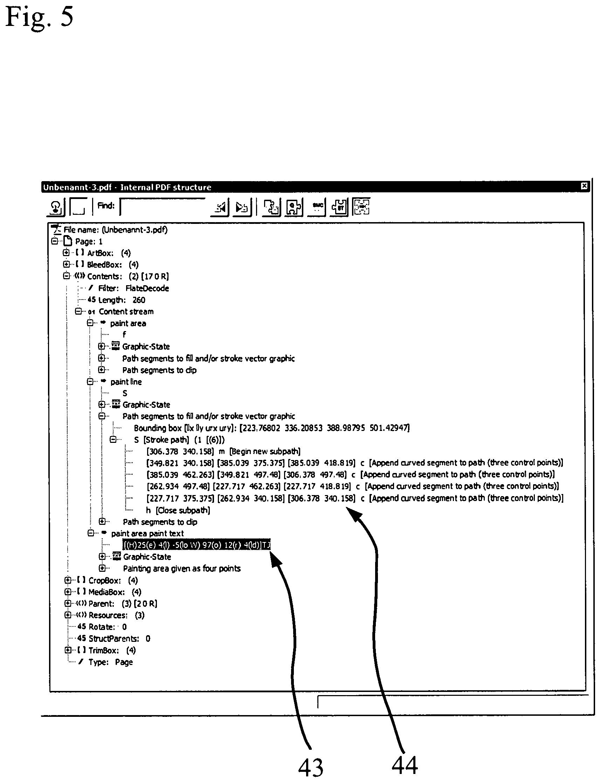

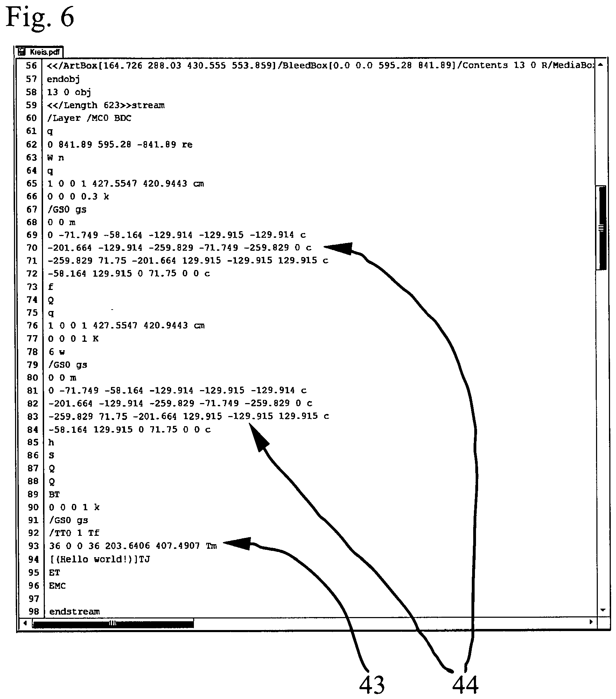

Hierbei können die Dateien beispielsweise in ein Containerformat, wie pdf, überführt werden. in einem derartigen Format sind Text- und Grafikelemente 43, 44 aufspürbar. So ist in der in Figur 4 im Druckbild dargestellten Datei, welche als Grafikelement 44 einen Kreis und als Textelement 43 "Hello World" aufweist, der Text separat von der Grafik auffindbar, insbesondere der in Figur 5 dargestellten Strukturdarstellung dieser Datei entnehmbar. Nicht ganz so offensichtlich sind die entsprechenden Informationen auch in der Textdarstellung (siehe Figur 6) der jeweiligen Datei enthalten, so dass die Textelemente entsprechend von den Grafikelementen maschinell getrennt und, wie vorstehend dargestellt, überprüft werden können.

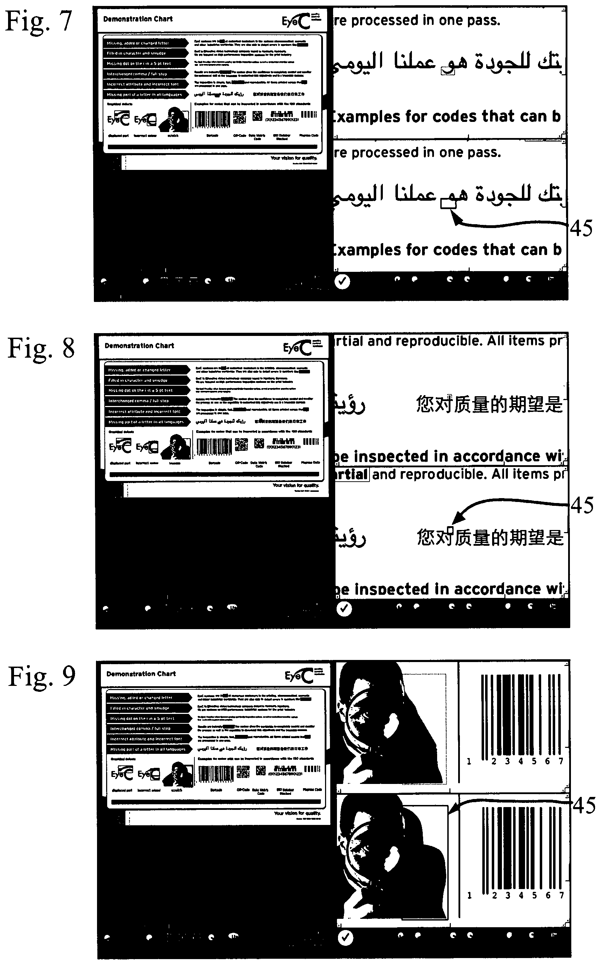

Hierbei versteht es sich, dass die Textelemente nicht zwingend auf lateinische Schriftzeichen beschränkt sind. Ebenso können andere Schriftsprachen, wie arabisch oder chinesisch, dementsprechend untersucht und verglichen werden, wie exemplarisch in Figuren 7 und 8 dargestellt, wobei hier - je nach Sprache bzw. Schriftart - die Leserichtung zu anzupassen ist, was jedoch durch die entsprechende Einbettung des Textes in der Regel kein Problem darstellt. Auch hier können ggf. entsprechend fehlende oder fehlerhafte Teile 45 markiert werden, so dass ein einfacher und betriebssicherer Vergleich stattfinden kann.

Auch fehlerhafte oder fehlende Teile 45 bei Grafiken können entsprechend markiert werden, wie in Figur 9 exemplarisch dargestellt.

**Bezugszeichenliste:**

| | | | |
|---|---|---|---|
| 10 | Datei | | |
| 11 | Grafikebene | 31 | Ebene für das Ergebnis des Textvergleichs |
| 12 | Textebene | | |
| 13 | Text | 32 | Ebene für das Ergebnis des Grafikvergleichs |
| 20 | Datei | | |
| 21 | Grafikebene | 43 | Textbereich der Datei |
| 22 | Textebene | 44 | Grafikbereich der Datei |
| 23 | Text | 45 | fehlendes oder fehlerhaftes Teil |

## Patentansprüche

1. Vorrichtung zum Vergleich zweier Grafik- und Textelemente enthaltende Dateien, umfassend einen Speicher für die beiden Dateien, Mittel zur Aufteilung der beiden Dateien in Grafik- und Textelemente, Mittel zur Texterkennung von Text in den Textelementen und Mittel zur Wandlung der erkannten Texte durch eine Anpassung der Lese- bzw. Laufrichtungen der erkannten Texte an die jeweilige Sprache, Rastergrafikmittel zur Erzeugung eines gerasterten Bildes aus den Grafikelementen, Mittel zum textlichen Vergleich der gewandelten Texte und Mittel zum graphischen Vergleich der gerasterten Bilder sowie Mittel zur, vorzugsweise gemeinsamen, Ausgabe der beiden Vergleichsergebnisse.

2. Vorrichtung nach Anspruch 1, **dadurch gekennzeichnet, dass** die Rastergrafikmittel einen Rastergrafikengine und/oder -prozessor umfassen.

3. Vorrichtung nach Anspruch 1 oder 2, **dadurch gekennzeichnet, dass** die Ausgabemittel einen Speicher und Abspeichermittel zum Abspeichern der Vergleichsergebnisse in einer Ergebnisdatei in dem Speicher umfassen.

4. Vorrichtung nach Anspruch 3, **dadurch gekennzeichnet, dass** die Abspeichermittel die Ergebnisdatei in dem Format wenigstens einer der beiden zu vergleichenden Dateien abspeichern.

5. Vorrichtung nach einem der Ansprüche 1 bis 4, **dadurch gekennzeichnet, dass** die Ausgabemittel einen Monitor umfassen.

6. Vorrichtung nach einem der Ansprüche 1 bis 5, **dadurch gekennzeichnet, dass** die Texterkennungsmittel Mittel zur Extraktion des Textes aus den Textelementen sowie Mittel zur Darstellung eines Textlaufs umfassen.

7. Verfahren zum Vergleich zweier Grafik- und Textelemente enthaltende Dateien, **dadurch gekennzeichnet, dass** bei beiden Dateien Grafikelemente und Textelemente aufgeteilt werden, und dass aus den Grafikelementen, wenn die entsprechende Datei nicht bereits ein Rasterformat aufweist, jeweils ein Rasterbild erzeugt wird und dass die Rastergrafiken miteinander graphisch verglichen werden sowie dass aus den Textelementen, wenn die Datei nicht bereits Text in Reinform vorliegen hat, jeweils der Text erkannt wird, dass die erkannten Texte durch eine Anpassung der Lese- bzw. Laufrichtungen der erkannten Texte an die jeweilige Sprache gewandelt und dass die gewandelten Texte miteinander textlich verglichen werden.

8. Verfahren nach Anspruch 7, **dadurch gekennzeichnet, dass** die beiden Vergleichsergebnisse gemeinsam dargestellt werden.

9. Verfahren nach Anspruch 8, **dadurch gekennzeichnet, dass** die Vergleichsergebnisse gemeinsam in einer Datei abgespeichert werden

10. Verfahren nach einem der Ansprüche 7 bis 9, **dadurch gekennzeichnet, dass** wenigstens eines der Grafikelemente zu einem Rasterbild gerendert wird.

11. Verfahren nach einem der Ansprüche 7 bis 10, **dadurch gekennzeichnet, dass** zum Aufteilen der Grafik- und Textelemente zunächst die Textelemente in eine separate Ebene gelegt werden.

## Claims

1. A device for comparing two files containing graphics elements and text elements comprising a memory for the two files, means for dividing the two files into graphics elements and text elements, text recognition means for recognizing text in the text elements and means for converting the recognized text by adapting the reading or running directions of the recognized text to the respective language, raster graphics means for generating a rasterized image from the graphics elements, means for the text comparison of the converted text and means for the graphics comparison of the rasterized images and means for the, preferably joint, output of the two comparison results.

2. The device according to claim 1, **characterized in that** the raster graphics means comprise a raster graphics engine and/or processor.

3. The device according to claim 1 or 2, **characterized in that** the output means comprise a memory and storage means for storing the comparison results in a results file in the memory.

4. The device according to claim 3, **characterized in that** the storage means store the result file in the format of at least one of the two files being compared.

5. The device according to one of claims 1 to 4, **characterized in that** the output means comprise a monitor.

6. The device according to one of claims 1 to 5, **characterized in that** the text recognition means comprise means for extracting the text from the text elements and means for displaying a text run.

7. A method for comparing two files containing graphics elements and text elements, **characterized in that** graphics elements and text elements are divided in the two files and that a rasterized image is produced from the graphics elements, if the corresponding file is not already in raster format, and that the raster graphics are compared with one another graphically and also that the text is recognized from the text elements, if the file does not already have text in pure form, that the recognized text is converted by adapting the reading or running directions of the recognized text to the respective language and that the converted texts are compared with one another in text terms.

8. The method according to claim 7, **characterized in that** the two comparison results are jointly depicted.

9. The method according to claim 8, **characterized in that** the comparison results are stored together in a file.

10. The method according to one of claims 7 to 9, **characterized in that** at least one of the graphics elements is rendered into a raster image.

11. The method according to one of claims 7 to 10, **characterized in that** in order to divide up the graphics elements and text elements, the text elements are initially placed in a separate layer.

## Revendications

1. Dispositif de comparaison de deux fichiers contenant des éléments graphiques et textuels comprenant une mémoire pour les deux fichiers, un moyen de division des deux fichiers en éléments graphiques et textuels, un moyen de reconnaissance textuelle du texte dans les éléments textuels et un moyen de conversion du texte reconnu au moyen d'une adaptation des directions de lecture ou de défilement des textes reconnus à la langue respective, un moyen d'image matricielle pour générer une image tramée à partir des éléments graphiques, un moyen de comparaison textuelle des textes convertis et un moyen de comparaison graphique des images tramées ainsi que un moyen pour, de préférence en commun, émettre les deux résultats de comparaison.

2. Dispositif selon la revendication 1, **caractérisé en ce que** les moyens d'image matricielle comprennent un moteur et/ou un processeur d'image matricielle.

3. Dispositif selon la revendication 1 ou 2, **caractérisé en ce que** les moyens d'émission comprennent une mémoire et un moyen d'enregistrement pour enregistrer les résultats de comparaison dans un fichier de résultat dans la mémoire.

4. Dispositif selon la revendication 3, **caractérisé en ce que** les moyens d'enregistrement enregistrent le fichier de résultats sous la forme d'au moins un d'un des deux fichiers à comparer.

5. Dispositif selon une des revendications 1 à 4, **caractérisé en ce que** les moyens d'émission comprennent un moniteur.

6. Dispositif selon une des revendications 1 à 5, **caractérisé en ce que** les moyens de reconnaissance textuelle comprennent des moyens d'extraction du texte hors des éléments textuels ainsi que des moyens de représentation d'un déroulement de texte.

7. Procédé de comparaison de deux fichiers contenant des éléments graphiques et textuels **caractérisé en ce que** dans les deux fichiers les éléments graphiques les éléments textuels sont séparés et **en ce que** à partir des éléments graphiques, lorsque le fichier correspondant ne présente pas déjà un format de trame, une image tramée respective est produite et **en ce que** les images matricielles sont comparées graphiquement les unes aux autres ainsi que à partir des éléments textuels, lorsqu le fichier ne comprend pas déjà le texte sous forme pure, le texte est respectivement reconnu **en ce que** les textes reconnus sont convertis à la langue respective au moyen d'une adaptation des directions de lecture ou de défilement de texte reconnu et **en ce que** les textes convertis sont comparés textuellement les uns aux autres.

8. Procédé selon la revendication 7, **caractérisé en ce que** les deux résultats de comparaison sont représentés en commun.

9. Procédé selon la revendication 8, **caractérisé en ce que** les résultats de comparaison sont enregistrés en commun dans un fichier.

10. Procédé selon une des revendications 7 à 9, **caractérisé en ce que** au moins un des éléments graphiques est restitué sous forme d'une image tramée.

11. Procédé selon une des revendications 7 à 10, **caractérisé en ce que** pour diviser les éléments graphiques et textuels, les éléments textuels sont tout d'abord placés dans un plan séparé.
